# EUROPEAN PATENT APPLICATION

(11) **EP 3 531 258 A1**
(43) Date of publication of application: **28.08.2019**
(21) Application number: 17867237.4
(22) Date of filing: 03.11.2017
(51) Int. Cl.: G06F 3/0481

(54) **METHOD FOR SEARCHING FOR ICON, AND TERMINAL**

(30) Priority: 03.11.2016 CN 201610974396
(71) Applicant: Huawei Technologies Co., Ltd., Longgang District Shenzhen, Guangdong 518129 (CN)
(72) Inventor: HUANG, Liwei, Shenzhen Guangdong 518129 (CN); QIAN, Kai, Shenzhen Guangdong 518129 (CN); GAO, Bo, Shenzhen Guangdong 518129 (CN)
(74) Representative: Gill Jennings & Every LLP
(86) International application number: PCT/CN2017/109332
(87) International publication number: WO 2018/082657

(57) **Abstract**

Embodiments of the present invention disclose an icon search method and apparatus, and a terminal. The method includes: detecting a keyword entered by a user in a search bar; searching for an application based on the keyword, and displaying a search result; triggering a function of locating a first application in the search result; and displaying a page on which the first application is located, and displaying an application icon of the first application in an animation form at an icon location in which the first application is located. According to the technical solutions of the method, the user can be rapidly notified of a location of the application icon, thereby improving user operation efficiency and improving user experience.

## Description

This application claims priority to Chinese Patent Application No. 201610974396.9, filed with the Chinese Patent Office on November 3, 2016 and entitled "ICON SEARCH METHOD AND TERMINAL", which is incorporated herein by reference in its entirety.

### TECHNICAL FIELD

The present invention relates to the field of terminal technologies, and in particular, to an icon search method and a terminal.

### BACKGROUND

With the development of intelligent terminals, more functions such as watching videos, listening to music, navigation, photographing, and investment and financing can be provided on the intelligent terminals. A user may install different applications on a mobile phone based on the user's requirements or preferences. As applications installed by the user increase, more application icons are included on pages of the mobile phone.

The user may obtain different services by installing a plurality of different applications on the mobile phone, thereby meeting the user's requirements in various aspects. When the user needs to start an application, the user can find a corresponding application icon on a home page, and tap the application icon to start the application. However, as there are increasingly more application icons on the pages of the mobile phone, if the user cannot remember a location of an application icon, it is sometimes quite difficult to rapidly find, on the pages, the application icon that the user wants to find. In this case, it is relatively trivial, time-consuming, and missing-prone for the user to search the pages one by one from the home page. Therefore, how to rapidly find a corresponding application icon becomes a difficulty for current users.

### SUMMARY

Embodiments of the present invention disclose an icon search method and a terminal, so as to overcome an existing case in which it is difficult to locate an icon location of an application because there are excessive application icons, thereby further meeting a user requirement.

According to a first aspect, an embodiment of the present invention provides an application icon search method, applied to a terminal with a display, and including: detecting, by the terminal, a keyword entered by a user in a search bar; searching for an application based on the keyword, and displaying a search result; triggering a function of locating a first application in the search result; and displaying a page on which the first application is located, and displaying an application icon of the first application in an animation form at an icon location in which the first application is located.

According to the method provided in the first aspect of the embodiments of the present invention, the user may find, in the terminal by entering an application name or attribute on a search screen, an installed application that meets a condition, and trigger a function of locating an icon of any application in a search result. According to the method, the user can rapidly learn a specific location of the application on a page of a mobile phone, thereby improving user operation efficiency.

In an optional implementation, if the first application is in a folder on the page, before the displaying an application icon of the first application in an animation form, the method further includes: displaying an icon of the folder in an animation form.

If an application icon that the user needs to search for is in a folder, and if the terminal directly displays the application icon in an animation form, the user may still not directly know a specific location of the icon. However, according to the method, a location of the folder is first displayed in an animation form, and then a location of the application icon in the folder is displayed, so that the user can be more clearly and intuitively notified of a detailed location of the application icon, thereby further improving user operation efficiency and user experience.

In an optional implementation, the triggering a function of locating the first application in the search result may specifically include: detecting, by a terminal, a gesture entered by a user; and if the detected gesture matches preset gesture information, triggering the function of locating the first application.

The terminal may locate an application icon corresponding to a locating icon by tapping the locating icon. In this implementation, the terminal may trigger a locating function by using a specified particular gesture, and the particular gesture may be specified based on an accustomed gesture of the user, to improve user operation efficiency and provide comfortable operation experience for the user.

Optionally, the preset gesture information includes at least one of the following: tap and hold, heavily press, or slide leftward or rightward in a response area of the first application. Gestures such as tapping and holding and heavily pressing are accustomed gestures of most users in other operations. Herein, an advantage of the accustomed gesture of the user may be considered, to improve operation efficiency. The gesture of sliding leftward and rightward in the response area of the first application does not overlap a frequently used gesture of a current user, and is simple and convenient, and user operation efficiency is high.

In an optional implementation, before the triggering the function of locating the first application, the method further includes: displaying prompt information related to a gesture that triggers the locating function.

Currently, when using the terminal, the user seldom reads materials such as a user manual of the terminal. Therefore, the user is not familiar with or even may not know many functions of the terminal. The terminal displays the prompt information related to the gesture that triggers the locating function, to prompt the user with the locating function and a specific operation manner, so that user experience can be greatly improved, and operation efficiency can be improved.

In an optional implementation, after the triggering the function of locating the first application, the method further includes: obtaining, by the terminal, a storage identifier ID of the first application; and obtaining, based on the storage ID, location information corresponding to the first application, where the location information includes the page on which the first application is located, and an icon location of the page.

The terminal may store information about all icons on the page, each icon corresponds to one storage identifier ID, and the storage identifier may be a container ID. The terminal further stores other information corresponding to the storage ID, for example, attribute and location information of an application corresponding to the icon. It may be understood that the terminal may store the information in a plurality of manners, and the information may be stored together or stored separately. This is not limited in this embodiment of the present invention. The terminal may rapidly obtain other information of the application by using the obtained storage ID, and dynamically display the other information to the user.

In an optional implementation, the animation form includes one or more of the following: an icon shakes, an icon is enlarged, or an icon color changes.

Displaying the application icon in an animation form may conspicuously remind the user of the location of the application icon, so that the user can rapidly find the application icon.

According to a second aspect, an embodiment of the present invention provides an icon search apparatus, and the apparatus includes: a detection module, a search module, a processing module, and a display module.

The detection module is configured to detect a keyword entered in a search bar.

The search module is configured to search for an application based on the keyword, and display a search result.

The processing module is configured to trigger a function of locating a first application in the search result.

The display module is configured to display a page on which the first application is located, and display an application icon of the first application in an animation form at an icon location in which the first application is located.

According to the icon search apparatus provided in the first aspect of the embodiments of the present invention, a user may find, in a terminal by entering an application name or attribute on a search screen, an installed application that meets a condition, and trigger a function of locating an icon of any application in a search result. According to the method, the user can rapidly learn a specific location of the application on a page of a mobile phone, thereby improving user operation efficiency.

The icon search apparatus provided in the second aspect of the embodiments of the present invention may further implement various implementations in the first aspect of the embodiments of the present invention. For details, refer to content of related implementations in the first aspect of the foregoing embodiment of the present invention. Details are not described herein again.

According to a third aspect, an embodiment of the present invention provides a terminal with a display function, including: one or more processors, a memory, a display, and a bus, where the one or more processors, the memory, and the display communicate with each other by using the bus, where
the memory is configured to store an instruction;
the display is configured to display a user interface; and
the one or more processors are configured to invoke the instruction in the memory to:
detect a keyword entered in a search bar;
search for an application based on the keyword, and display a search result;
trigger a function of locating a first application in the search result; and
display a page on which the first application is located, and display an application icon of the first application in an animation form at an icon location in which the first application is located.

According to the terminal with a display function provided in the first aspect of the embodiments of the present invention, a user may find, in the terminal by entering an application name or attribute on a search screen, an installed application that meets a condition, and trigger a function of locating an icon of any application in a search result. According to the method, the user can rapidly learn a specific location of the application on a page of a mobile phone, thereby improving user operation efficiency.

The terminal provided in the third aspect of the embodiments of the present invention may further implement various implementations in the first aspect of the embodiments of the present invention. For details, refer to content of related implementations in the first aspect of the foregoing embodiment of the present invention. Details are not described herein again.

According to the foregoing icon search method and apparatus and the terminal, the keyword entered by the user is detected, an installed application is matched, and a function of locating an application icon is triggered, so that an application icon corresponding to an application that the user needs to search for is highlighted on a corresponding page. According to the technical solutions, the user can be rapidly notified of a location of the application icon, thereby improving user operation efficiency and further improving user experience.

### BRIEF DESCRIPTION OF DRAWINGS

To describe the technical solutions in the embodiments of the present invention more clearly, the following briefly describes the accompanying drawings required for describing the embodiments. The accompanying drawings in the following description show merely some embodiments of the present invention, and a person of ordinary skill in the art may still derive other drawings from these accompanying drawings.
FIG. 1 (a), FIG. 1 (b), and FIG. 1 (c) are schematic diagrams of a display screen of a mobile phone according to some embodiments of the present invention;
FIG. 2 is a schematic flowchart of an icon search method according to some embodiments of the present invention;
FIG. 3 is a schematic diagram of a search screen according to some embodiments of the present invention;
FIG. 4 is a schematic diagram of a search screen including a search result according to some embodiments of the present invention;
FIG. 5 (a) and FIG. 5 (b) are schematic diagrams of gestures that trigger a function of locating an application icon according to some embodiments of the present invention;
FIG. 6 is a schematic diagram of another search screen including a search result according to some embodiments of the present invention;
FIG. 7 (a), FIG. 7 (b), and FIG. 7 (c) are schematic diagrams of prompt information according to some embodiments of the present invention;
FIG. 8 is a schematic flowchart of a method for locating and displaying an application icon according to some embodiments of the present invention;
FIG. 9 is a schematic diagram of displaying an application icon in an animation form according to some embodiments of the present invention;
FIG. 10 is a schematic diagram of displaying an application icon in another animation form according to some embodiments of the present invention;
FIG. 11 is a schematic structural diagram of an icon search apparatus according to some embodiments of the present invention; and
FIG. 12 is a schematic structural diagram of a terminal according to some embodiments of the present invention.

### DESCRIPTION OF EMBODIMENTS

To make the objectives, technical solutions, and advantages of the present invention clearer, the following further describes the embodiments of the present invention in detail with reference to the accompanying drawings. To understand the present invention, the following detailed description mentions many specific details. However, a person skilled in the art should understand that the present invention may be implemented without these specific details. In other embodiments, well-known methods, processes, components, and circuits are not described in detail, to prevent the embodiments from being blurred. Apparently, the described embodiments are a part rather than all of the embodiments of the present invention. All other embodiments obtained by a person of ordinary skill in the art based on the embodiments of the present invention without creative efforts shall fall within the protection scope of the present invention.

The terms used in the embodiments of the present invention are intended to describe a specific embodiment better, and are not intended to limit the present invention. The terms "a", "an", and "the" of singular forms used in the embodiments and the appended claims of the present invention are also intended to include plural forms, unless otherwise specified in the context clearly. In the specification, claims, and accompanying drawings of the present invention, the terms "first", "second", "third", and so on are used to distinguish between different objects but do not describe a specific order. It should also be understood that the term "and/or" used herein indicates and includes any or all possible combinations of one or more associated listed items. It should be further understood that the term "include" used in the specification specifies presence of features, integers, steps, operations, elements and/or components, with presence or attachment of other features, integers, steps, operations, components, elements, and their combinations not excluded.

A terminal in the embodiments of the present invention may include a terminal with a display screen, such as a mobile phone, a tablet computer, a personal digital assistant, a wearable device, or an in-vehicle device. The mobile phone is used as an example for description in the following embodiments of the present invention.

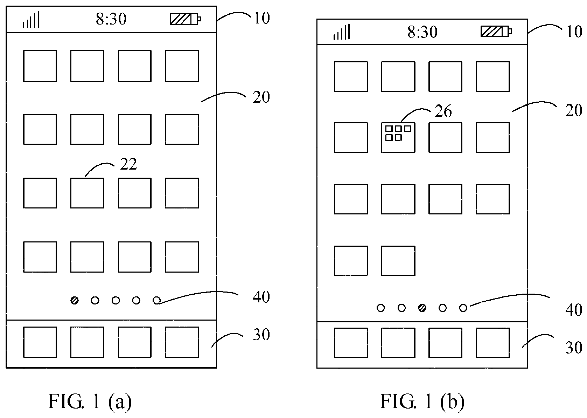

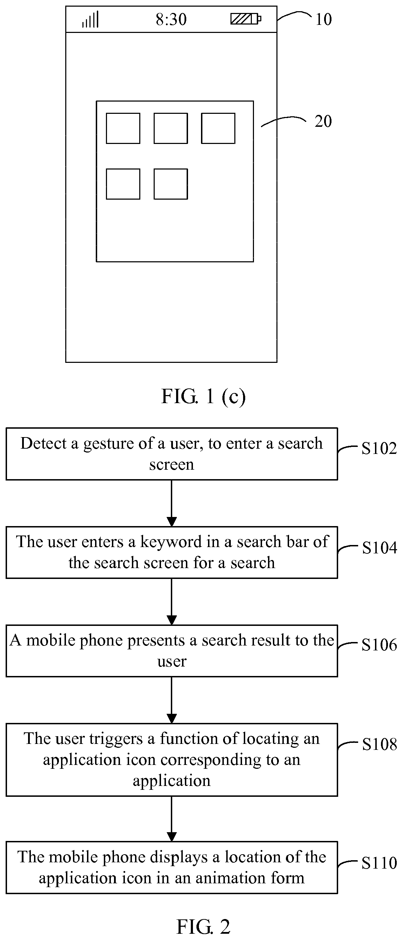

FIG. 1 is a schematic diagram of a display screen of a mobile phone. As shown in FIG. 1 (a), the display screen of the mobile phone may include a status bar 10, a page 20, and a favorites bar 30. On the page 20 of the mobile phone, an application icon 22 may be placed, and an application name (not shown in the figure) corresponding to the application icon may be displayed. A size of each application icon on each page and a maximum quantity of application icons that can be placed on each page are preset. The mobile phone often needs to use a plurality of pages to display icons of a plurality of applications. For example, the mobile phone may include five pages, and each page may have application icons of a plurality of applications. Therefore, the display screen of the mobile phone may further include navigation points 40 of the pages.

As shown in FIG. 1 (b), a folder icon 26 may also be placed on the page 20 of the mobile phone. To overcome cluttered and irregular display of application icons, a user may place a plurality of application icons in a same folder. The user may place application icons having a same attribute in a same folder, or may place application icons that are frequently used or that meet another rule in a same folder. The user may alternatively add an application icon into a folder in another manner, and no specific limitation is imposed in this embodiment of the present invention. A folder is set, so that application icons placed on the pages of the mobile phone can be reduced to an extent, and regularity of display of the application icons can be improved.

When the user taps the folder, the screen of the mobile phone can display a display screen of the folder. To be specific, application icons in the folder are displayed, as shown in FIG. 1 (c). It may be understood that FIG. 1 (c) is merely an example. After the folder is opened, the navigation points 40 on a page of the favorites bar 30 may be displayed, or may not be displayed. A name and the like of the folder may also be displayed above or under the folder.

An application icon and a folder icon that are placed on the pages of the mobile phone correspond to respective icon locations, and the mobile phone stores icon location information of each icon on the pages. For example, an icon location of the application icon 22 in FIG. 1 (a) is the third row and the second column of a first page. An icon location of the folder icon 26 in FIG. 1 (b) is the second row and the second column of a third page. It may be understood that information about the foregoing icon locations is an example form for ease of understanding. The mobile phone may store a specific icon location of each icon on the pages of the mobile phone in a plurality of manners, for example, the mobile phone may store absolute coordinates of each icon or store relative coordinates of each icon. This is not specifically limited in this embodiment of the present invention.

As more applications are placed on the page 20, it is often difficult for the user to remember locations of some application icons. Therefore, it is often relatively difficult for the user to search the pages of the mobile phone with many application icons for icons of some applications that are not frequently used. To resolve the foregoing problem, an embodiment of the present invention provides an application icon search method, to rapidly find an application icon, and resolve the foregoing problems of the user. As shown in FIG. 2, the application icon search method may include the following steps.

S102. Detect a gesture of a user, to enter a search screen.

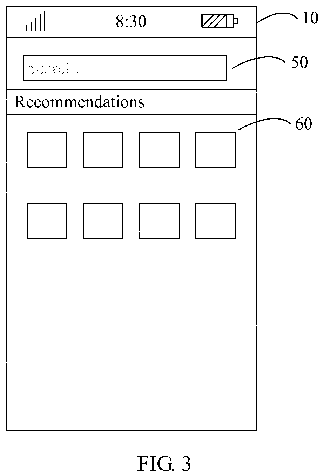

In this embodiment of the present invention, the mobile phone may include a search screen. For example, the search screen may be shown in FIG. 3. The search screen may include a search bar 50 and a search result display area 60. Optionally, before the user performs a search, the mobile phone may automatically recommend, to the user, some applications such as applications that are latest used or frequently used by the user, as shown by icons in the search result display area 60 in FIG. 3. Certainly, this is merely an example, and does not constitute a limitation to this embodiment of the present invention.

The user may enter the search screen by using a gesture pre-defined in a system. For example, the user may enter the search screen by performing a particular gesture on any page of the mobile phone, for example, the user triggers a slide down gesture on a page of the mobile phone.

It may be understood that different terminals may enter a search screen in different implementations, and the search screen may be specifically displayed in a plurality of forms. For example, the mobile phone may display the search screen in a form of a drawer (Drawer) screen, or the user can enter the search screen by using a gesture of sliding rightward with a finger on a first page of some terminals. This is not specifically limited in this embodiment of the present invention.

It may be understood that the mobile phone may alternatively enter the search screen by recognizing a voice command.

S104. The user enters a keyword in a search bar of the search screen for a search.

In some implementations of the mobile phone, the mobile phone performs a search only when the user taps a search button after entering the keyword. In some other implementations of the mobile phone, each time the user enters a character, the mobile phone automatically triggers a search for content that matches the corresponding entered character. The foregoing search manner is not specifically limited in this embodiment of the present invention. Optionally, the user may also enter the keyword by using a voice.

The keyword entered by the user may be an application name, which is a displayed name associated with an application icon. Optionally, the keyword entered by the user may be the entire application name or a part of the application name. After detecting the name entered by the user, the mobile phone can search for an application including the name, and display, to the user, an application icon corresponding to a found application. For example, the user may enter "video" and then perform a search, and the mobile phone displays found and installed applications that include the "video", such as "Tencent Video" and "Sohu Video". Alternatively, the mobile phone may further search for and display another application whose application name includes the character "video". According to the method, the user can conveniently find an application whose application name is known, thereby bringing great convenience to the user. According to the foregoing search method, however, the user needs to accurately know an application name; otherwise, the user may not find a desired result. For example, in the foregoing "video" search example, names of some video players may not include the character "video", and these applications may be missed in the foregoing search. For example, applications already installed by the user, such as "IQIYI" and "Youku", may be missed.

Therefore, in another implementation of this embodiment of the present invention, another method for implementing a search is disclosed. The user may enter any keyword such as an application name or an application type, or may enter a combination of a name and a type. The mobile phone may match the entered keyword with related information such as names and attributes of all applications, and display, to the user, an application whose name or attribute meets the keyword.

S106. A mobile phone presents a search result to the user.

It may be understood that a thumbnail or an original image of an application icon may be displayed in the search result. Herein, the original image means that a size of the displayed application icon is the same as that of an application icon on a page of the mobile phone.

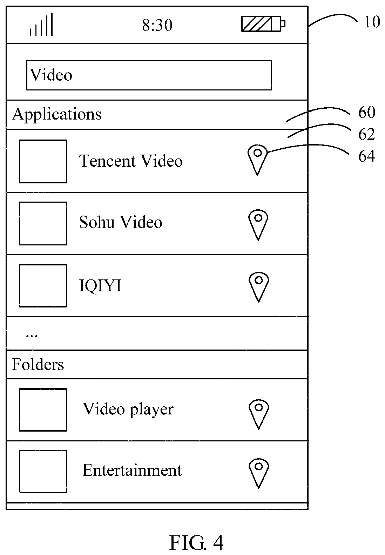

The mobile phone may display the search result in a list menu. In an optional implementation, the mobile phone may display an application icon and a locating icon that correspond to a matched application. The locating icon can be used to determine and display a location of the application icon on the pages of the mobile phone. The mobile phone may separately display the application icon and the locating icon of the application. For example, as shown in FIG. 4, an application icon and an application name are displayed on the left of each search result, for example, a list item 62, and a locating icon 64 is displayed on the right of the search result. Optionally, when tapping the application icon on the left, the user can directly trigger the application. For example, the application is started, or an interface of the application is entered when the application already runs in background.

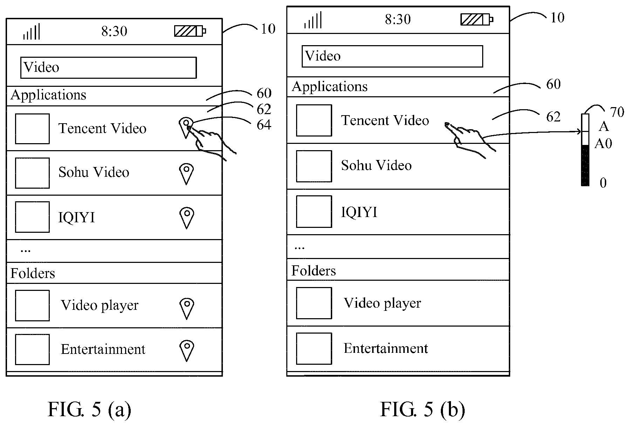

The user may tap a locating icon to trigger a function of locating an application icon of a corresponding application, as shown in FIG. 5 (a). Optionally, the mobile phone may not display the locating icon of the application. The user may trigger, by using a preset gesture, the function of locating the application icon. For example, as shown in FIG. 5 (b), the user may trigger, by using a particular gesture, the function of locating the application icon. An indication icon 70 is merely used to explain and describe a gesture of the user. AO and A each may be a time for touching and holding by the user. When a time A for touching and holding by the user in a response area of the list item 62 exceeds a preset threshold AO (touch and hold), a function of locating a corresponding application icon is triggered. Optionally, A0 and A each may be force of touching and holding by the user. In this case, when force A of touching and holding by the user in the whole response area of the list item 62 exceeds a preset threshold A0 (heavily press), the function of locating the corresponding application icon is triggered. It may be understood that, when the mobile phone displays the search result in a list menu, the response area of the list item 62 is a response area of an application, for example, "Tencent Video" shown in FIG. 5 (b).

Optionally, the user may alternatively trigger, by sliding leftward, sliding rightward, or sliding leftward and rightward in the response area of the list item 62, the function of locating the application icon of the corresponding application. The sliding leftward or rightward may further include direction information, for example, from left to right, or from right to left. Optionally, the sliding leftward or rightward may further include a quantity of sliding times, such as once, twice, three times, or other more times.

Optionally, the mobile phone may alternatively set both the foregoing two triggering manners. To be specific, the mobile phone displays the locating icon, and the user can trigger a locating function by tapping the locating icon, and can also trigger the locating function by using another gesture.

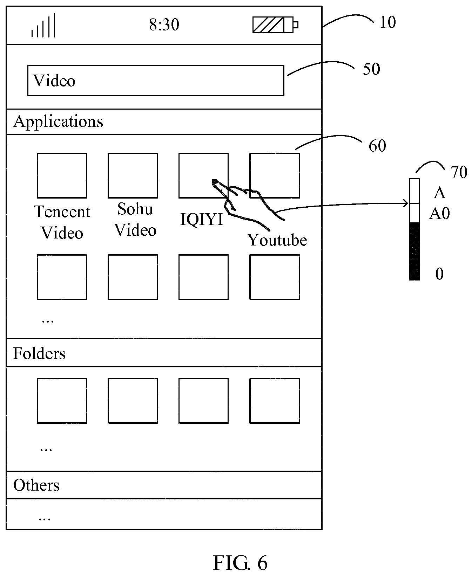

When the mobile phone displays the search result in a list menu, information that can be displayed on the display screen is limited. When there are a relatively large quantity of search results, the user may need to drag a drop-down bar (not shown in the figure) to obtain information about a target application. Therefore, the mobile phone may not display the search result in a list menu. For example, the mobile phone may display the search result on the display screen in a springboard form. To be specific, response areas of applications in the search result are no longer long-strip-shaped list items, but application icons in the search result are sequentially arranged, and the response areas are correspondingly areas in which the application icons are located, as shown in FIG. 6. For an interface display architecture of the mobile phone, refer to http://www.zhihu.com/question/21430811, and a latest visit date is September 15, 2016.

When the mobile phone does not display the search result in a list menu, the locating icon may be not displayed. A particular gesture is set on the mobile phone to trigger the locating function. For example, the user may touch and hold an icon to trigger the locating function, heavily press an icon to trigger the locating function, or slide leftward, slide rightward, or slide leftward and rightward with a finger on the icon to trigger the locating function.

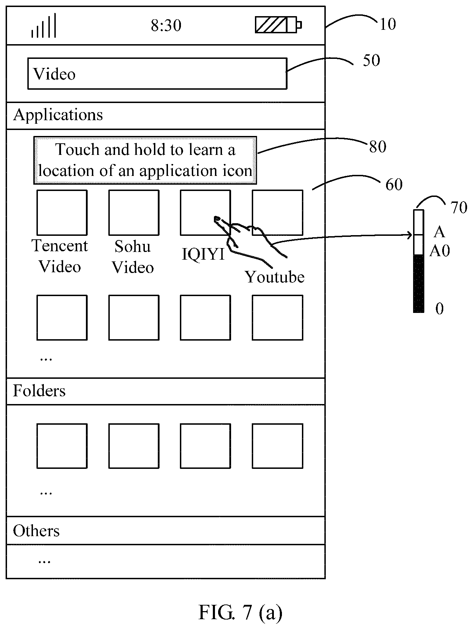

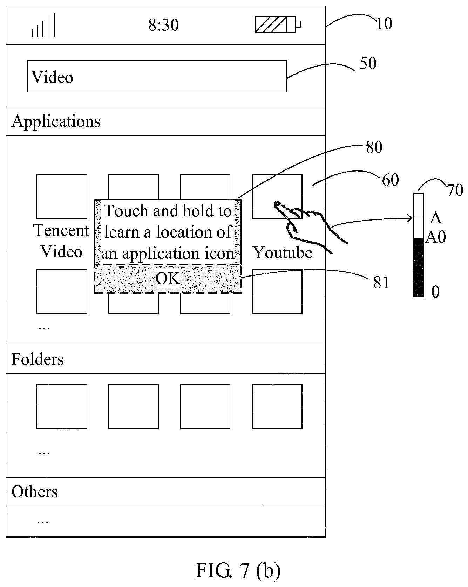

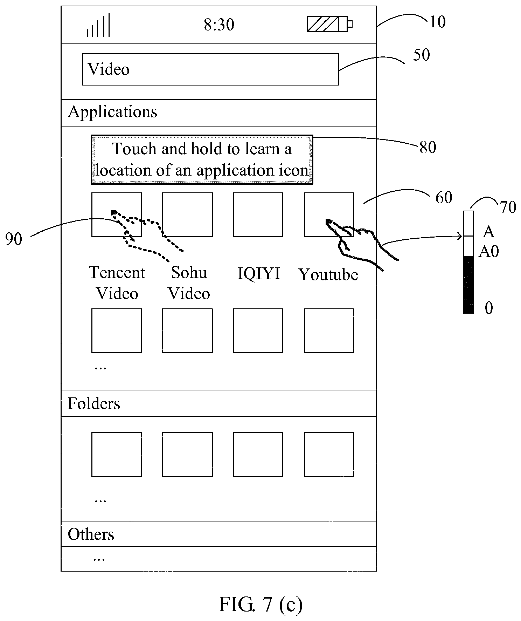

Optionally, when the mobile phone does not display the locating icon, the user may not know how to trigger the locating function, or even may not know that the mobile phone has such a function. Therefore, the mobile phone may display prompt information on a display screen of the search result, to prompt the user with information about a gesture that triggers the locating function. As shown in FIG. 7 (a), a display block 80 is used to display the prompt information. It may be understood that the prompt information may be displayed in a plurality of manners. As shown in FIG. 7 (b), the mobile phone may alternatively prompt the user in a window form. The mobile phone displays the prompt information in a window form, which may be short-time display, that is, the prompt information disappears after being displayed for a preset time; or may be always displayed; to be specific, the prompt information keeps displayed until the user performs confirmation, for example, taps a confirmation box 81. Alternatively, as shown in FIG. 7 (c), when a floating operation performed with the user's finger is detected on a display of the mobile phone, to be specific, the user's finger approaches the display but is still not in contact with the display, the prompt information is displayed. Optionally, the mobile phone may alternatively pop up a selection box for selection by the user after detecting a gesture of the user. Based on selection in the selection box, the user may enter an application, or locate an application icon, or perform another function. Optionally, the mobile phone may alternatively prompt the user by using a voice. For an information prompt manner, there may be many other implementations, and no limitation is imposed herein in this embodiment of the present invention.

S108. The user triggers a function of locating an application icon corresponding to an application.

The user may trigger, by using a particular gesture, a function of locating an application icon of a target application, to learn a specific location of the application icon on the pages of the mobile phone. For a manner in which the user triggers the locating function, refer to the foregoing description, and details are not described herein again.

S110. The mobile phone displays a location of the application icon in an animation form.

After detecting that the user triggers the function of locating the application icon, the mobile phone obtains location information of the application icon, and notifies the user. If the application icon is on a page shown in FIG. 1, the display screen of the mobile phone switches to the corresponding page to display the application icon. If the application icon is in a folder, the display screen of the mobile phone switches to a screen on which the corresponding folder is located, to display the corresponding folder, and opens the folder to display the icon of the target application.

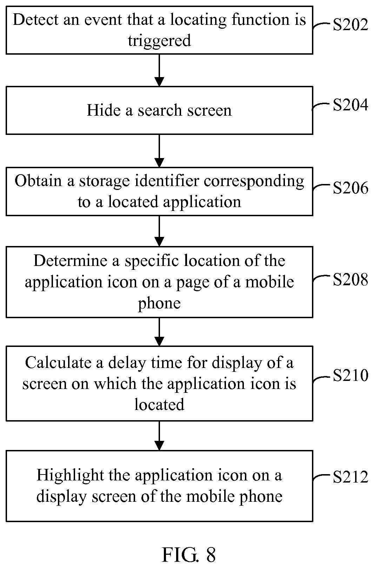

Optionally, in an embodiment of the present invention, an application icon is used as an example to describe a method for locating and displaying an icon by a mobile phone. As shown in FIG. 8, the method may include the following steps. It may be understood that the method in this embodiment of the present invention may also be used to locate a folder icon.

S202. Detect an event that a locating function is triggered.

The event that the locating function is triggered may be that a user taps a locating icon, or may be implemented by using another preset gesture. For example, the user may trigger the locating function by using a gesture such as heavily pressing an icon, touching and holding the icon, or sliding leftward or rightward on the icon. Details are not described herein again.

S204. Hide a search screen.

It may be understood that the search screen may be first hidden, and then a display screen of the mobile phone displays another page. Optionally, the search screen is directly replaced with or covered by another display screen, or it may be considered that the search screen is hidden. For example, when the display screen of the mobile phone is redirected to a page of the mobile phone on which an application icon that needs to be located is located, it may be considered that the search screen is hidden.

S206. Obtain a storage identifier, such as a container identifier (ID), corresponding to a located application icon.

A search result obtained after the user enters a keyword may be an application, or may be a folder. In this embodiment of the present invention, an application icon (Icon) and a folder (Folder) icon may be referred to as an entity view (View).

The mobile phone may store information about each icon on a page, and the information may specifically include an identifier and an attribute of the icon, a location of the icon on the page, and the like. For example, the mobile phone may store association information of each icon on the page by using a container. The container is a structure for storing information, and the container stores an object by using a systematic method that complies with a particular access rule. For content, refer to https://zh.wikipedia.org/wiki/%E5%AE%B9%E5%99%A8_(%E8%AE%A1%E7%AE%97% E6%9C%BA%E7%A7%91%E5%AD%A6), and a latest visit date is November 2, 2016. Each icon on the page of the mobile phone has a corresponding container ID.

Icon information stored in the mobile phone includes attribute information of an icon. After obtaining a container ID of a located object, the mobile phone may query attribute information of the object based on the container ID. The attribute information may include a folder icon or an application icon, and may further include another form that can be displayed.

In an optional implementation, after obtaining a container ID, the mobile phone may first determine attribute information corresponding to the container ID, and then obtain an entity view based on the attribute information.

S208. Determine a specific location of the application icon on a page of a mobile phone.

The mobile phone can obtain, based on the container ID of the application icon, stored location information of the application icon. The application icon is located at a location L on a page P. It may be understood that if the application icon is in a folder, information about the corresponding folder, for example, a name and a location of the folder, also needs to be obtained for determining of the specific location of the application icon. The information about the folder may be obtained by using an association relationship between the application icon and the folder.

S210. Calculate a delay time for display of a screen on which the application icon is located.

In an optional implementation, the mobile phone may enter the search screen from any page, and the page before the mobile phone enters the search screen may be considered as a current page P0. Therefore, the mobile phone can calculate a page distance between the page P and the current page P0.

In an optional implementation, if the entity view is not on the current page, the display screen needs to switch from the current page P0 to the page P on which the entity view is located. If a time required for switching between adjacent pages each time is fixed, a delay time of animation can be calculated based on the page distance. In this way, when the display screen of the mobile phone switches exactly to the page on which the entity view is located, an icon is dynamically displayed, thereby exactly prompting the user with the location of the application icon.

Optionally, after obtaining the location of the entity view, the mobile phone may draw a display screen of the page on which the entity view is located, to directly replace the search screen without controlling the display screen to switch from the current page to the page on which the entity view is located.

S212. Highlight the application icon on a display screen of the mobile phone.

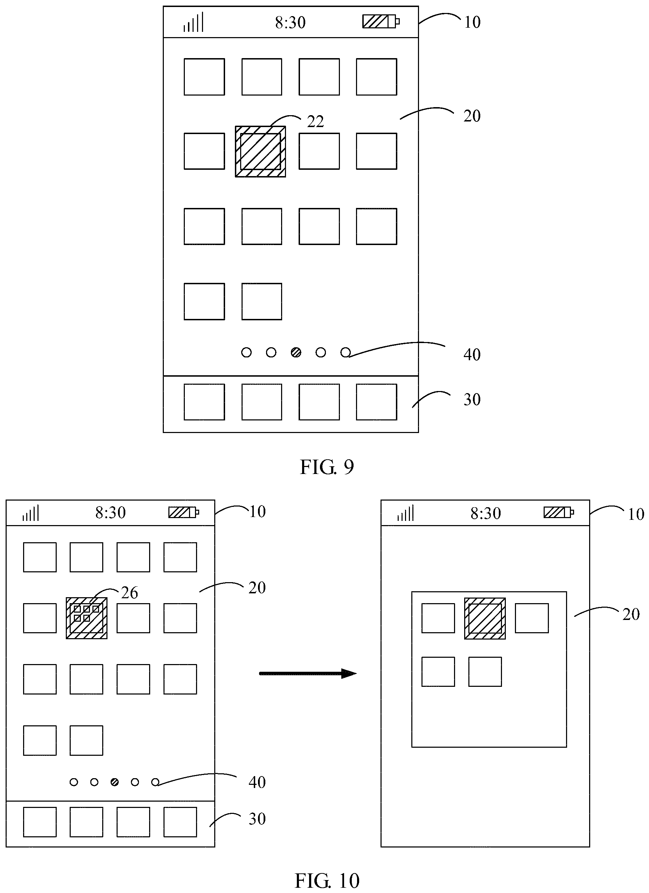

The mobile phone displays a page corresponding to the located application icon, and displays the application icon in an animation form at an icon location of the application icon, as shown in FIG. 9. If the application icon is in a folder, the display screen of the mobile phone first switches to a location of the corresponding folder, and then displays the folder in an animation form. Then the folder is opened, and the application icon is displayed in an animation form on a view screen of the folder, as shown in FIG. 10. It may be understood that displaying the folder in an animation form and displaying the application icon in an animation form may be implemented in a same animation manner, or may be implemented in different animation manners. The animation manner may be one or more of a shaking animation, an enlargement animation, a color change animation, or a brightness change animation (such as blinking). The animation manner may be another manner. No specific limitation is imposed in this embodiment of the present invention.

In the foregoing method, locating an application icon is used as an example for description. The foregoing method may also be applicable to locating a folder, or locating another object that can be used for display. For specific content and implementation details, refer to the method shown in the figure, and details are not described herein again.

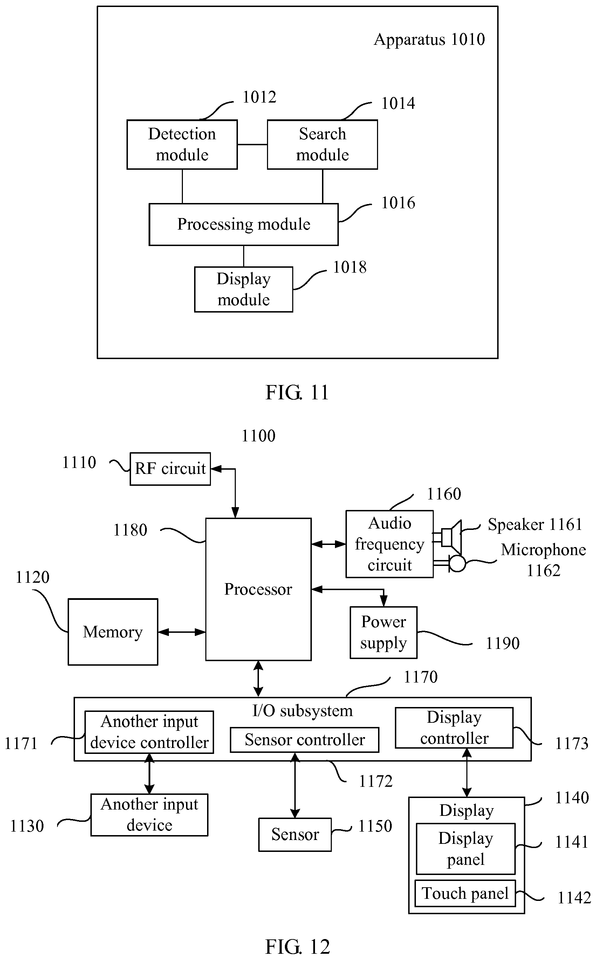

FIG. 11 is a schematic structural diagram of an icon search apparatus according to some embodiments of the present invention. The icon search apparatus 1010 is configured to implement the foregoing icon search method related to FIG. 1 to FIG. 10. The icon search apparatus 1010 may specifically include: a detection module 1012, a search module 1014, a processing module 1016, and a display module 1018.

The detection module 1012 may be configured to detect a keyword entered in a search bar.

The search module 1014 may be configured to search for an application based on the keyword, and display a search result.

The processing module 1016 may be configured to trigger a function of locating a first application in the search result.

The display module 1018 may be configured to display a page on which the first application is located, and display an application icon of the first application in an animation form at an icon location in which the first application is located.

Optionally, if the first application is in a folder on the page, before displaying the application icon of the first application in an animation form, the display module 1018 may be further configured to display an icon of the folder in an animation form.

Optionally, that the processing module 1016 is configured to trigger a function of locating the first application in the search result specifically includes: detecting a gesture entered by a user; and if the detected gesture matches preset gesture information, triggering the function of locating the first application. Optionally, the preset gesture information includes at least one of the following: tap and hold, heavily press, or slide leftward or rightward in a response area of the first application.

Before the processing module 1016 is configured to trigger the function of locating the first application, the display module 1018 may be further configured to display prompt information related to a gesture that triggers the locating function.

After the processing module 1016 is configured to trigger the function of locating the first application, the processing module 1016 may be further configured to: obtain a storage identifier ID of the first application; and obtain, based on the storage ID, location information corresponding to the first application, where the location information includes the page on which the first application is located, and an icon location of the page. For a specific implementation, refer to corresponding description of the method in FIG. 8, and details are not described herein again.

The icon search apparatus 1010 can perform the foregoing method in FIG. 1 to FIG. 10. For specific implementation details, refer to the foregoing related description in FIG. 1 to FIG. 10, and details are not described herein again. Both characteristics and technical effects in FIG. 1 to FIG. 10 are applicable to the icon search apparatus 1010.

Referring to FIG. 12, the present invention further provides a terminal 1100 for implementing the method provided in the embodiments of the present invention, configured to perform a processing procedure of the terminal and the foregoing icon search method in FIG. 1 to FIG. 10.

FIG. 12 is a block diagram of a partial structure of the terminal 1100 related to this embodiment of the present invention. Referring to FIG. 12, the terminal 1100 includes components such as an RF (Radio Frequency, radio frequency) circuit 1110, a memory 1120, another input device 1130, a display 1140, a sensor 1150, an audio frequency circuit 1160, an I/O subsystem 1170, a processor 1180, and a power supply 1190. A person skilled in the art may understand that the structure of the mobile terminal shown in FIG. 12 does not constitute a limitation to the mobile terminal, and may include more or fewer components than those shown in the figure, or some components may be combined, or some components may be split, or a different component layout may be used.

The components of the terminal 1100 are specifically described below with reference to FIG. 12.

The RF circuit 1110 may be configured to receive and send a signal in an information receiving or sending process or a call process, and in particular, after receiving downlink information of a base station, send the downlink information to the processor 1180 for processing; and send uplink-related data to the base station. Usually, the RF circuit 1110 includes but is not limited to an antenna, at least one amplifier, a transceiver, a coupler, an LNA (Low Noise Amplifier, low noise amplifier), a duplexer, and the like. In addition, the RF circuit 1110 may further communicate with a network and another device through wireless communications.

The memory 1120 may be configured to store a software program and a module, and the processor 1180 runs the software program and the module that are stored in the memory 1120, to execute various functional applications of the terminal 1100 and perform data processing. The memory 1120 may mainly include a program storage area and a data storage area. The program storage area may store an operating system, an application required by at least one function (such as an audio play function or an image play function), and the like. The data storage area may store data (such as audio frequency data or an address book) created based on use of the terminal 1100 and the like. In addition, the memory 1120 may include a high-speed random access memory, and may further include a non-volatile memory, for example, at least one disk storage device, a flash memory device, or another volatile solid-state storage device.

The another input device 1130 may be configured to receive input numeral or character information, and generate key signal input related to a user setting and functional control of the terminal 1100. Specifically, the another input device 1130 may include but is not limited to one or more of a physical keyboard, a function key (such as a volume control key or a switch key), a trackball, a mouse, a joystick, and an optical mouse (the optical mouse is a touch-sensitive surface that does not display visual output or an extension of a touch-sensitive surface including a touchscreen). The another input device 1130 is connected to another input device controller 571 of the I/O subsystem 1170, and is controlled by the another device input controller 1171 to perform signal interaction with the processor 1180.

The display 1140 may be configured to display information input by a user or information provided for the user, an application program of the terminal 1100, and the like, and may further receive user input. Specifically, the display 1140 may include a display panel 1141, and a touch panel 1142, and the display panel 1141 may be configured in a form of an LCD (Liquid Crystal Display, liquid crystal display), an OLED (Organic Light-Emitting Diode, organic light-emitting diode), or the like. The touch panel 1142 is also referred to as a touchscreen, a touch-sensitive screen, or the like, can collect a contact or non-contact operation (which is, for example, an operation performed by the user on the touch panel 1142 or near the touch panel 1142 by using any proper object or accessory such as a finger or a stylus, or may also include a motion sensing operation; and includes an operation type such as a single-point operation or a multi-point operation) performed by the user on or near the touch panel, and drive a corresponding connection apparatus based on a preset program. Optionally, the touch panel 1142 may include two parts: a touch detection apparatus and a touch controller. The touch detection apparatus detects a touch orientation and a touch posture of the user, detects a signal brought by the touch operation, and transfers the signal to the touch controller. The touch controller receives touch information from the touch detection apparatus, converts the touch information into information that can be processed by the processor, and sends the information to the processor 1180; and can receive a command sent by the processor 1180 and execute the command. In addition, the touch panel 1142 may be implemented in a plurality of types, such as a resistor type, a capacitor type, an infrared type, and a surface acoustic wave type, or may be implemented by using any technology to be developed in the future. Further, the touch panel 1142 may cover the display panel 1141. The user may perform, based on content that is displayed on the display panel 1141 (the displayed content includes but is not limited to a soft keyboard, a virtual mouse, a virtual key, an icon, and the like), an operation on or near the touch panel 1142 that covers the display panel 1141. After detecting the operation on or near the touch panel, the touch panel 1142 transfers the operation to the processor 1180 by using the I/O subsystem 1170 to determine user input. Then, the processor 1180 provides corresponding visual output on the display panel 1141 by using the I/O subsystem 1170 based on the user input. Although the touch panel 1142 and the display panel 1141 in FIG. 12 are used as two independent components to implement input and output functions of the terminal 1100. However, in some embodiments, the touch panel 1142 and the display panel 1141 may be integrated to implement the input and output functions of the terminal 1100.

The terminal 1100 may further include at least one sensor 1150, such as an optical sensor, a motion sensor, or another sensor. Specifically, the optical sensor may include an ambient light sensor, and a proximity sensor. The ambient light sensor may adjust luminance of the display panel 1141 based on brightness of ambient light. The proximity sensor may turn off the display panel 1141 and/or backlight when the terminal 1100 approaches an ear. As a type of motion sensor, an acceleration sensor can detect acceleration values in directions (usually three axes), and detect a value and a direction of gravity when the acceleration sensor is still, and is applicable to applications (for example, switching between landscape and portrait screens, related games, and magnetometer posture calibration) for recognizing a terminal posture, a function related to vibration recognition (such as a pedometer or a knock), and the like. Other sensors such as a gyroscope, a barometer, a hygrometer, a thermometer, and an infrared sensor may also be configured in the terminal 1100, and details are not described herein.

The audio frequency circuit 1160, a speaker 1161, and a microphone 1162 may provide an audio interface between the user and the terminal 1100. The audio frequency circuit 1160 may transmit, to the speaker 1161, a signal converted from received audio data, and the speaker 1161 converts the signal into a sound signal for outputting. In addition, the microphone 1162 converts a collected sound signal into a signal, and the audio frequency circuit 1160 receives the signal and converts the signal into audio frequency data, and then outputs the audio frequency data to the RF circuit 108, to send the audio frequency data to, for example, another mobile terminal, or output the audio frequency data to the memory 1120 for further processing.

The I/O subsystem 1170 is a peripheral device configured to control input and output, and may include the another device input controller 1171, a sensor controller 1172, and a display controller 1173. Optionally, one or more other device input controllers 1171 receive a signal from the another input device 1130 and/or send a signal to the another input device 1130, where the another input device 1130 may include a physical button (a press button or a rocker button), a dial pad, a slider switch, a joystick, a click scroll wheel, an optical mouse (the optical mouse is a touch-sensitive surface that does not display visual output or an extension of a touch-sensitive surface including a touchscreen), and the like. It should be noted that the another input device controller 1171 may be connected to any one or more of the foregoing devices. The display controller 1173 in the I/O subsystem 1170 receives a signal from the display 1140 and/or sends a signal to the display 1140. After the display 1140 detects user input, the display controller 1173 converts the detected user input into interaction with a user interface object that is displayed on the display 1140; in other words, human-machine interaction is implemented. The sensor controller 1172 may receive a signal from the one or more sensors 1150 and/or send a signal to the one or more sensors 1150.

The processor 1180 is a control center of the terminal 1100, and uses various interfaces and lines to connect parts of the entire mobile terminal. By running or executing a software program and/or a module stored in the memory 1120 and invoking data stored in the memory 1120, the processor 1180 performs various functions of the terminal 1100 and processes data, to perform overall monitoring on the mobile terminal. Optionally, the processor 1180 may include one or more processors or processing modules. Preferably, an application processor and a modem processor may be integrated into the processor 1180. The application processor mainly processes an operating system, a user interface, an application program, and the like. The modem processor mainly processes wireless communications. Optionally, the processor 1180 may include an integrated circuit (Integrated Circuit, IC for short), for example, may include a single encapsulated IC, or may include a plurality of encapsulated ICs that are connected and that have same or different functions. For example, the processor may include only a central processing unit (Central Processing Unit, CPU for short), or may be a combination of a GPU, a digital signal processor (Digital Signal Processor, DSP for short), and a control chip (such as a baseband chip) in a communications unit. In this implementation of the present invention, the CPU may be a single computing core, or may include a plurality of computing cores.

It may be understood that the terminal may further combine the memory and the processor, or the processor of the terminal may perform various functions without invoking the data in the memory, but invoke an instruction in the processor to perform a function of the terminal. This is not limited in this embodiment of the present invention.

The terminal 1100 further includes the power supply 1190 (such as a battery) that supplies power to the components. Preferably, the power supply may be logically connected to the processor 1180 by using a power supply management system. In this way, functions such as management of charging, discharging, and power consumption are implemented by using the power supply management system.

The terminal 1100 may further include a camera, a Bluetooth module, a Wireless Fidelity (Wireless-Fidelity, Wi-Fi or WiFi) module, and the like, which are not shown though. Details are not described herein.

FIG. 12 is a universal structural block diagram of the mobile terminal. It may be understood that different mobile terminals may include more or fewer structures than those in FIG. 12. For example, the mobile terminal may further include structures such as a Bluetooth module, a WiFi module, an infrared module, and the like.

The one or more processors included in the processor 1180 may be configured to invoke the instruction in the memory to perform the foregoing icon search method.

That the processor 1180 is configured to perform the icon search method may include: detecting a keyword entered by a user in a search bar; searching for an application based on the keyword, and displaying a search result; triggering a function of locating a first application in the search result; and displaying a page on which the first application is located, and displaying an application icon of the first application in an animation form at an icon location in which the first application is located.

Optionally, the animation form may include one or more of the following: an icon shakes, an icon is enlarged, or an icon color changes; or may include some animation forms in which the user can be visually prompted. This is not specifically limited in this embodiment of the present invention.

Optionally, the processor 1180 may be further configured to: if the first application is in a folder on the page, before displaying the application icon of the first application in an animation form, the method further includes: displaying an icon of the folder in an animation form.

Optionally, that the processor 1180 triggers the function of locating the first application in the search result may specifically include: detecting a gesture entered by the user; and if the detected gesture matches preset gesture information, triggering the function of locating the first application.

Optionally, the preset gesture information may include: touching and holding or heavily pressing a response area of the first application, or sliding leftward, sliding rightward, or sliding leftward and rightward in a response area of the first application. The sliding leftward or rightward may further include direction information, for example, from left to right, or from right to left. Optionally, the sliding leftward or rightward may further include a quantity of sliding times, such as once, twice, three times, or other more times.

Before the triggering the function of locating the first application, the processor 1180 may be further configured to: display prompt information related to a gesture that triggers the locating function.

After the triggering the function of locating the first application, the processor 1180 may be further configured to: obtain a storage identifier ID of the first application; and obtain, based on the storage ID, location information corresponding to the first application, where the location information includes the page on which the first application is located, and an icon location of the page.

The terminal can perform the foregoing method in FIG. 1 to FIG. 10. For specific implementation details, refer to the foregoing related description in FIG. 1 to FIG. 10, and details are not described herein again. Both characteristics and technical effects in FIG. 1 to FIG. 10 are applicable to the terminal 1100.

It should be noted that the terminal for implementing the icon search method disclosed in this embodiment of the present invention may also be a processor, a processor as well as a necessary auxiliary circuit and an auxiliary component (for example, a display or a speaker), a chip, or a chipset including a plurality of chips.

It should be understood that, in this embodiment of the present invention, the processor may be a central processing unit (Central Processing Unit, "CPU" for short). The processor may alternatively be another general purpose processor, a digital signal processor (DSP), an application-specific integrated circuit (ASIC), a field programmable gate array (FPGA) or another programmable logical device, a discrete gate or transistor logical device, or a discrete hardware component. The general purpose processor may be a microprocessor, or may be any conventional processor or the like.

The hardware structure shown in FIG. 12 and the foregoing description are applicable to various mobile terminals provided in the embodiments of the present invention. A person of ordinary skill in the art may understand that all or some of the steps of the foregoing methods may be implemented by program instructing relevant hardware. The program may be stored in a computer readable storage medium. The computer readable storage medium may be a ROM, a RAM, a compact disc, or the like.

A person of ordinary skill in the art may understand that all or some of the steps of the foregoing methods in the embodiments of the present invention may be implemented by program instructing relevant hardware. The program may be stored in a computer readable storage medium. The computer readable storage medium may be a ROM, a RAM, a compact disc, or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An icon search method, comprising:
detecting a keyword entered in a search bar;
searching for an application based on the keyword, and displaying a search result;
triggering a function of locating a first application in the search result; and
displaying a page on which the first application is located, and displaying an application icon of the first application in an animation form at an icon location in which the first application is located.

2. The method according to claim 1, wherein if the first application is in a folder on the page, before the displaying an application icon of the first application in an animation form, the method further comprises: displaying an icon of the folder in an animation form.

3. The method according to claim 1, wherein the triggering a function of locating the first application in the search result specifically comprises:
detecting a gesture entered by a user; and
if the detected gesture matches preset gesture information, triggering the function of locating the first application.

4. The method according to claim 3, wherein the preset gesture information comprises at least one of the following: tap and hold, heavily press, or slide leftward or rightward in a response area of the first application.

5. The method according to any one of claims 1 to 4, wherein before the triggering the function of locating the first application, the method further comprises:
displaying prompt information related to a gesture that triggers the locating function.

6. The method according to any one of claims 1 to 5, wherein after the triggering the function of locating the first application, the method further comprises:
obtaining a storage identifier, ID, of the first application; and
obtaining, based on the storage ID, location information corresponding to the first application, wherein the location information comprises the page on which the first application is located, and an icon location of the page.

7. The method according to any one of claims 1 to 6, wherein the animation form comprises one or more of the following: an icon shakes, an icon is enlarged, or an icon color changes.

8. The method according to any one of claims 1 to 7, wherein the keyword is all or a part of an application name; or the keyword is an application type.

9. An icon search apparatus, wherein the apparatus comprises: a detection module, a search module, a processing module, and a display module, wherein
the detection module is configured to detect a keyword entered in a search bar;
the search module is configured to search for an application based on the keyword, and display a search result;
the processing module is configured to trigger a function of locating a first application in the search result; and
the display module is configured to display a page on which the first application is located, and display an application icon of the first application in an animation form at an icon location in which the first application is located.

10. The apparatus according to claim 9, wherein if the first application is in a folder on the page, before displaying the application icon of the first application in an animation form, the display module is further configured to display an icon of the folder in an animation form.

11. The apparatus according to claim 9 or 10, wherein that the processing module is configured to trigger a function of locating the first application in the search result specifically comprises:
detecting a gesture entered by a user; and
if the detected gesture matches preset gesture information, triggering the function of locating the first application.

12. The apparatus according to claim 11, wherein the preset gesture information comprises at least one of the following: tap and hold, heavily press, or slide leftward or rightward in a response area of the first application.

13. The apparatus according to any one of claims 9 to 12, wherein before the processing module is configured to trigger the function of locating the first application, the display module is further configured to display prompt information related to a gesture that triggers the locating function.

14. The apparatus according to any one of claims 9 to 13, wherein after the processing module is configured to trigger the function of locating the first application, the processing module is further configured to:
obtain a storage identifier ID of the first application; and
obtain, based on the storage ID, location information corresponding to the first application, wherein the location information comprises the page on which the first application is located, and an icon location of the page.

15. A terminal with a display function, comprising: one or more processors, a memory, a display, and a bus, wherein the one or more processors, the memory, and the display communicate with each other by using the bus, wherein
the memory is configured to store an instruction;
the display is configured to display a user interface; and
the one or more processors are configured to invoke the instruction in the memory, to perform the following steps:
detecting a keyword entered in a search bar;
searching for an application based on the keyword, and displaying a search result;
triggering a function of locating a first application in the search result; and
displaying a page on which the first application is located, and displaying an application icon of the first application in an animation form at an icon location in which the first application is located.

16. The terminal according to claim 15, wherein if the first application is in a folder on the page, before the displaying an application icon of the first application in an animation form, the one or more processors are further configured to display an icon of the folder in an animation form.

17. The terminal according to claim 15 or 16, wherein that the one or more processors are further configured to trigger a function of locating the first application in the search result specifically comprises:
detecting a gesture entered by a user; and
if the detected gesture matches preset gesture information, triggering the function of locating the first application.

18. The terminal according to claim 17, wherein the preset gesture information comprises at least one of the following: tap and hold, heavily press, or slide leftward or rightward in a response area of the first application.

19. The terminal according to any one of claims 15 to 18, wherein before the triggering the function of locating the first application, the one or more processors are further configured to:
control the display to display prompt information related to a gesture that triggers the locating function.

20. The terminal according to any one of claims 15 to 19, wherein after the triggering the function of locating the first application, the one or more processors are further configured to:
obtain a storage identifier ID of the first application; and
obtain, based on the storage ID, location information corresponding to the first application, wherein the location information comprises the page on which the first application is located, and an icon location of the page.

21. The terminal according to any one of claims 15 to 20, wherein the animation form comprises one or more of the following: an icon shakes, an icon is enlarged, or an icon color changes.

22. The terminal according to any one of claims 15 to 21, wherein the keyword is all or a part of an application name; or the keyword is an application type.
